# EUROPEAN PATENT SPECIFICATION

(11) **EP 2 898 934 B1**
(45) Date of publication and mention of the grant of the patent: **07.09.2016**
(21) Application number: 14152160.9
(22) Date of filing: 22.01.2014
(51) Int. Cl.: A63B 57/00, A63B 57/50, G01C 15/04, A63C 19/06

(54) **Device for creating a visual marker in the grass on a golf course**
Vorrichtung zum Erstellen einem sichtbaren Marker im Gras einem Golfplatzs.
Dispositif pour créer un marqueur visuel dans la pelouse d'un terrain de golf.

(43) Date of publication of application: 29.07.2015
(73) Proprietor: KSAB GOLF EQUIPMENT AKTIEBOLAG, 721 31 Västerås (SE)
(72) Inventor: Jakobsson, Magnus, 724 67 Västerås (SE)
(74) Representative: Olsson, Jan

(56) References cited:
- WO-A1-2006/019356
- FR-A1- 2 730 646
- GB-A- 2 258 161
- US-A- 3 267 901
- US-A- 5 357 897
- US-A- 6 053 822

## Description

### TECHNICAL FIELD OF THE INVENTION AND BACKGROUND ART

The present invention relates to a device for creating a visual marker in the grass on a golf course according to the preamble of claim 1.

Devices for creating a visual marker in the grass on a golf course are used for different purposes, such as for marking the distance from one position to another. The distance on fairway to green is for instance marked with such a device for creating a visual marker. Such devices comprise a base which is anchored in the ground and an elongated marker connected to the base.

The marker of devices according to the state of the art consists of a pole, a pipe or the like. The marker is bendable between the upright position and the lying position. The marker is configured to be brought from the upright position to the lying position when driven over by a lawnmower, especially a cylinder lawnmower, by a front part of the lawnmower contacting the marker and pushing the marker so that it bends towards the grass, whereby a cutting cylinder of the lawnmower cuts over the marker.

Devices according to the state of the art also comprise a disc configured in such a way that it extends horizontally from the base along the grass. The disc is designed to stabilize the orientation of the device.

A problem with devices according to the state of the art is that the grass around such a device is not being cut evenly since the marker in its lying position prevents blades of grass located under this to enter into contact with the cutting cylinder of the lawnmower. Parts of the grass around devices of this type already known are accordingly not being cut, which influences the appearance of the golf course and can also affect the playing of the golf. The grass located under the disc mentioned above is also prevented from growing naturally and being cut.

A device for creating a visual marker on a ground is already known through US 3 267 901 A. Said device is suitable for use at a construction site, such as in road building. The device comprises a wooden stake configured to be anchored in the ground as well as a cluster of strands which are attached to and protrude from the top of the stake so as to together form a visible "flag". The strands ensures in this way that the device is visible even when the stake is covered with dirt. The strands are made of stiff, resilient material so that they may be scraped across by the blade of an earth working machine and will then automatically flip back to the desired position.

Both FR 2 730 646 A1 and WO 2006/019356 A1 disclose golf ball supports having a plurality of parallel bristles on top of which a golf ball can rest. These supports could be steadily anchored in the ground under the grass and their subject-matter corresponds to the preamble of claim 1.

Both US 6 053 822 A and GB 2 258 161 A disclose golf ball supports having a plurality of substantially parallel bristles which splay outwardly and on top of which a golf ball can rest. These supports could be steadily anchored in the ground under the grass.

### SUMMARY OF THE INVENTION

The object of the invention is to provide a device for creating a visual marker in the grass on a golf course improved in at least some aspect with respect to such devices already known.

This object is obtained by providing a device according to claim 1.

The concept "grass" in terms of direction, for example "along the grass", is in this disclosure relating to the extension of the lawn.

The elongated elements are by a user visually perceived as a unit which is to be seen even at a long distance by that they in the upright position extend parallel or substantially parallel to each other.

The elongated elements will when driven over by the lawnmower be bent in different directions with respect to each other as they are brought from the upright position to the lying position by the at least one direction of the bending-tendency of a majority of the elongated elements being another than that of their adjacent elongated element. This results in that the elongated elements are oriented separately from each other in the lying position, allowing blades of grass from the grass to penetrate up between adjacent elongated elements and accordingly be exposed for the cutting cylinder of the lawnmower. An improved cutting of the grass in direct proximity around the device is thereby achieved.

The concept "bending-tendency" relates to one or more directions in which an elongated element has a tendency to be bent by influence of a force substantially perpendicular to the longitudinal axis of the elongated element in the upright position. An elongated element with bending-tendency in a plurality of different determined directions will by influence of a force substantially perpendicular to the longitudinal axis of the element in the upright position accordingly be bent in the direction that is closest to the direction in which said influencing force acts.

The elongated elements have resilient properties and are by that configured to be bent while storing potential energy and as soon as external forces acting upon them are taken away return to the upright position in which they have the lowest potential energy.

According to another embodiment of the invention said at least one direction of the bending-tendency of said majority of the elongated elements is determined by at least one part of each of said majority of elongated elements having a wave-shape with respect to the longitudinal axis of the respective element. By said majority of the elongated elements having a wave-shape with respect to the longitudinal axis of the respective element they will be bent in different directions when brought from the upright position to the lying position and accordingly be oriented separate from each other in the lying position, whereby blades of grass are allowed to penetrate between adjacent elongated elements.

The concept "wave-shape" relates to an alternating deviation of the extension of an elongated element with respect to the longitudinal axis of that element. The alternating deviation is preferably periodical, such as a sinus-shaped deviation or the like.

According to another embodiment of the invention said wave-shape comprises at least 5, 5-20, at least 15 or at least 25 periods per elongated element.

According to another embodiment of the invention said wave-shape of the elongated elements having said wave-shape is irregular in such a way that the wave-shapes of two adjacent elongated elements deviate from each other and that said elongated elements are irregularly oriented with respect to their respective adjacent elongated elements. By said wave-shape of the elongated elements having said wave-shape being irregular in such a way that the wave-shapes of two adjacent elongated elements deviate from each other and said elongated elements being irregularly oriented with respect to their respective adjacent elongated elements bending of said elongated elements in different directions as they are brought from the upright position to the lying position is provided.

According to another embodiment of the invention said at least one direction of the bending-tendency of said majority of elongated elements is determined by said majority of elongated elements being designed so that a cross-section perpendicular to their respective longitudinal axis is asymmetrical with respect to said longitudinal axis.

According to another embodiment of the invention said majority of elongated elements are designed so that the cross-section perpendicular to their respective longitudinal axis has an elliptical shape. The elliptical form of said majority of elongated elements is providing an asymmetry which is advantageous in the manufacture of the elongated elements.

According to another embodiment of the invention the elongated elements are irregularly oriented in the base, the irregular orientation of the elongated elements with respect to their respective adjacent elongated elements thereby being achieved.

According to another embodiment of the invention the elongated elements have a length of at least 150 mm, 150-400 mm, 200-300 mm or at least 400 mm. By the elongated elements having said length it is ensured when using a lawnmower for golf courses and the like that the elongated elements are bent by a front part of the lawnmower from the upright position to the lying position before the cutting cylinder enters into contact with the elongated elements.

According to another embodiment of the invention the elongated elements form an accumulation in the upright position, with a circumference perpendicular to the extension of the elongated elements of between 10-150 mm, 10-100 mm, 10-70 mm or 20-40 mm. A marker that is visible for the user even at a long distance is provided by the accumulation of the elongated elements in the upright position.

According to another embodiment of the invention the marker comprises at least 10, 10-200, 20-150 or 50-100 said elongated elements.

According to another embodiment of the invention the elongated elements have a width of 0.5-5 mm or 2-4 mm.

According to another embodiment of the invention all of the elongated elements have said wave-shape. As all elongated elements have said wave-shape an optimal separation of the elongated elements when brought to the lying position and optimal possibility for blades of grass to penetrate between adjacent elongated elements in the lying position is provided.

According to another embodiment of the invention each of the elongated elements has a bending-tendency in at least one determined direction, wherein the at least one direction of the bending-tendency of all of the elongated elements is another than that of their respective adjacent elongated elements so that all of the elongated elements are configured to be bent from the upright position to the lying position in different directions with respect to each other.

According to another embodiment of the invention all of the elongated elements are designed in such a way that the cross-section perpendicular to their respective longitudinal axis has an elliptical form.

According to another embodiment of the invention the base comprises means for anchoring the device in the ground. The means for anchoring the device in the ground may for example comprise on or more protrusions which provide an enlarged contact surface between the base and the ground under the grass. Said means are providing a steady anchoring of the device in the ground and the stabilizing disc that is used in devices according to the state of the art described is not necessary. Said means may for example be an elongated pipe that is pushed down into the ground in which pipe a holder is arranged, which holds the elongated elements.

According to another embodiment of the invention the elongated elements comprise a material that is resistant to material removal by contact with a cutting cylinder of a lawnmower. The elongated elements are by means of said material especially resistant to material removal as a result of a sliding contact in the direction along the respective longitudinal axis of the elongated elements.

According to another embodiment of the invention the elongated elements comprise a polymeric material, especially selected from the group of Polypropene, Acrylonitrile-Butadiene-Styrene, Polyethene terephthalate, Polyamide, Polyvinylchloride and Polycarbonate, preferably Polyamide. Said group of polymeric materials are providing an improved resistance to material removal as a result of contact with a cutting cylinder of a lawnmower.

According to another embodiment of the invention the amplitude of the wave-shape of the elongated elements is less than 10 mm, less than 5 mm or less than 2 mm. Said amplitude of the wave-shape is advantageous for providing bending of the elongated elements with sufficient difference in directions when they are brought from the upright position to the lying position.

### BRIEF DESCRIPTION OF THE DRAWINGS

A device according to art already known as well as an embodiment of a device according to the invention are now to be described more closely by describing these with reference to the appended drawings.
- Figs. 1a-b &: 2a-bshow a device for creating a visual marker in the grass on a golf course according to the state of the art.
- Fig. 1a: shows said device with the marker in an up-right position seen from the side.
- Fig. 1b: shows said device with the marker in the up-right position seen from above.
- Fig. 2a: shows said device with the marker in a lying position seen from the side.
- Fig. 2b: shows said device with the marker in the lying position seen from above.
- Figs. 3a-b & 4a-b: show a device for creating a visual marker in the grass on a golf course according to an embodiment of the invention.

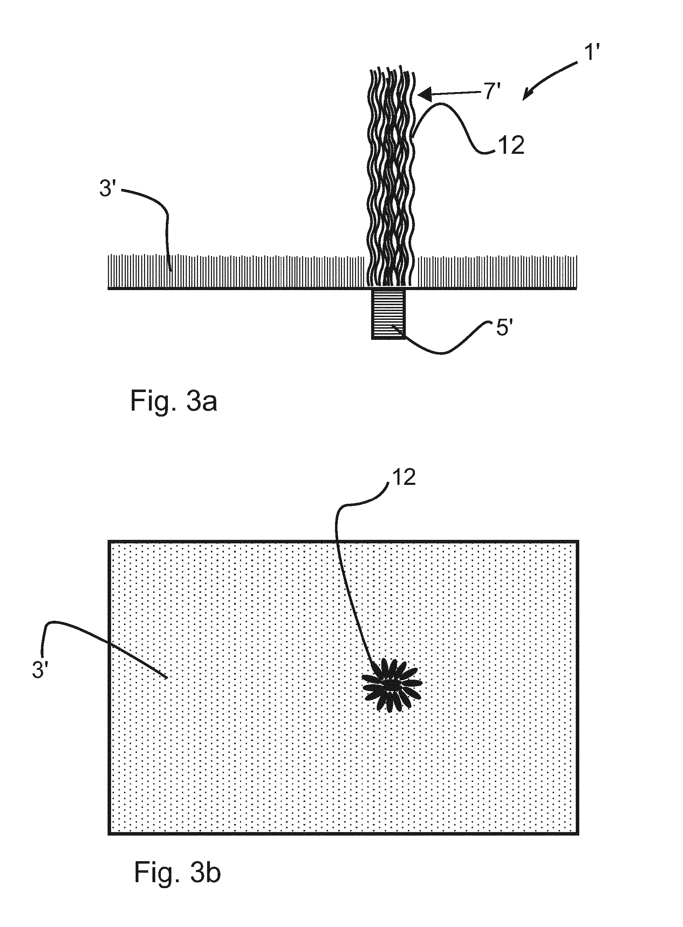

- Fig. 3a: shows said device with the marker in an up-right position seen from the side.
- Fig. 3b: shows said device with the marker in the up-right position seen from above.

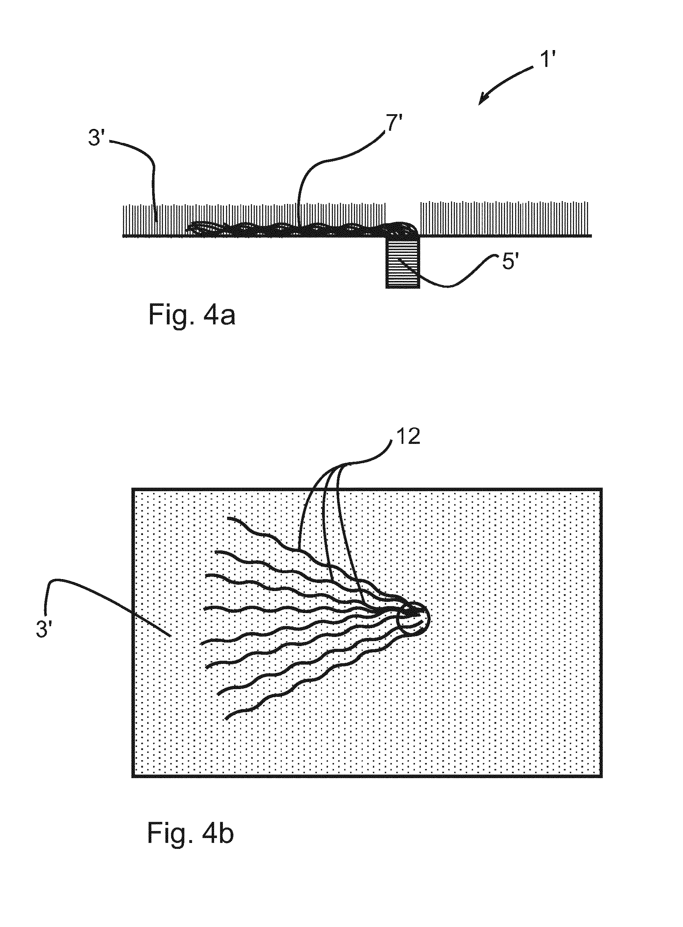

- Fig. 4a: shows said device with the marker in a lying position seen from the side.
- Fig. 4b: shows said device with the marker in the lying position seen from above.

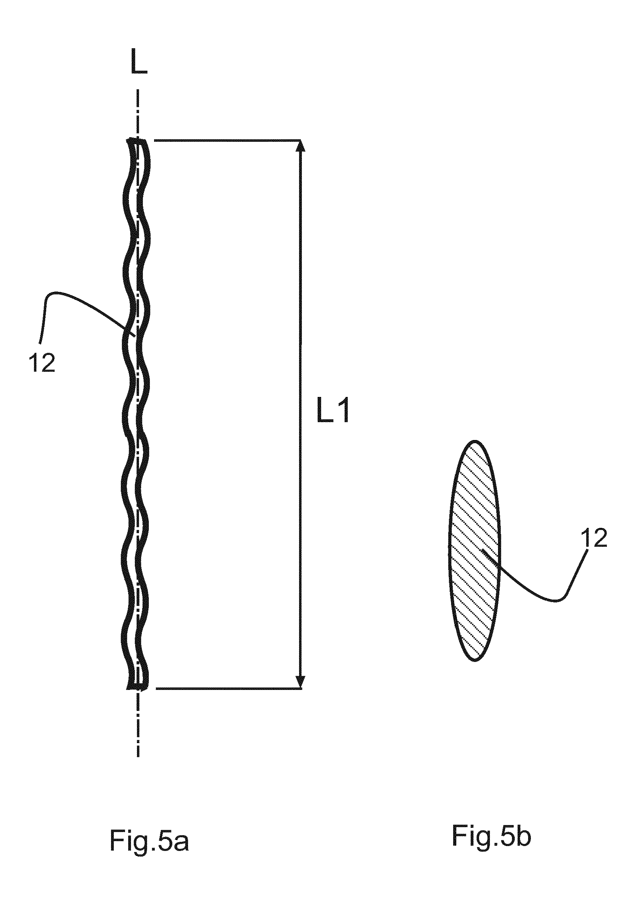

- Figs. 5a-b: show an embodiment of an elongated element of the device in Figs. 3a-b and 4a-b in detail.
- Fig. 5a: shows said elongated element seen from the side.
- Fig. 5b: shows said elongated element seen from above.

### DETAILED DESCRIPTION OF A PREFERRED EMBODIMENT OF THE INVENTION

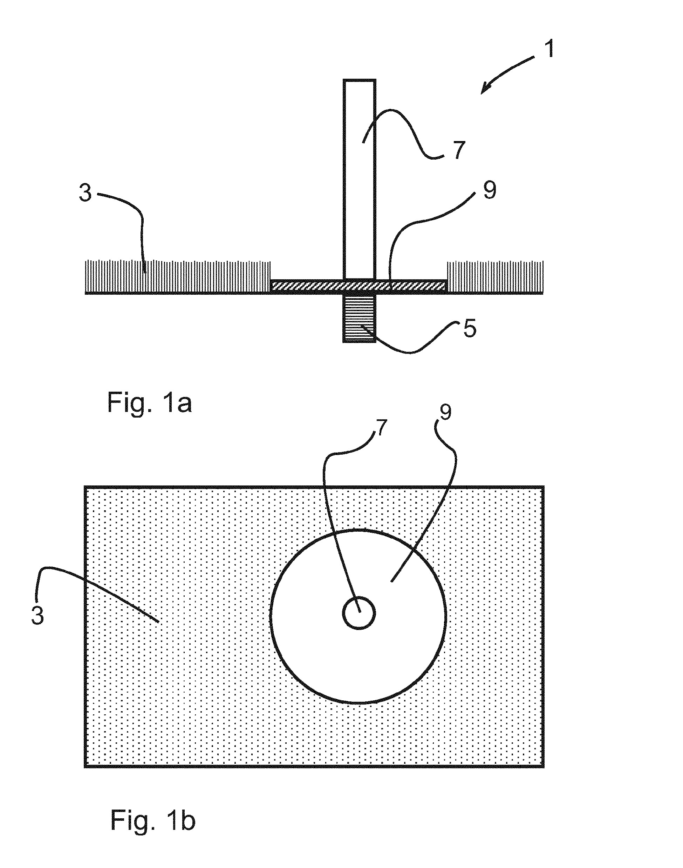

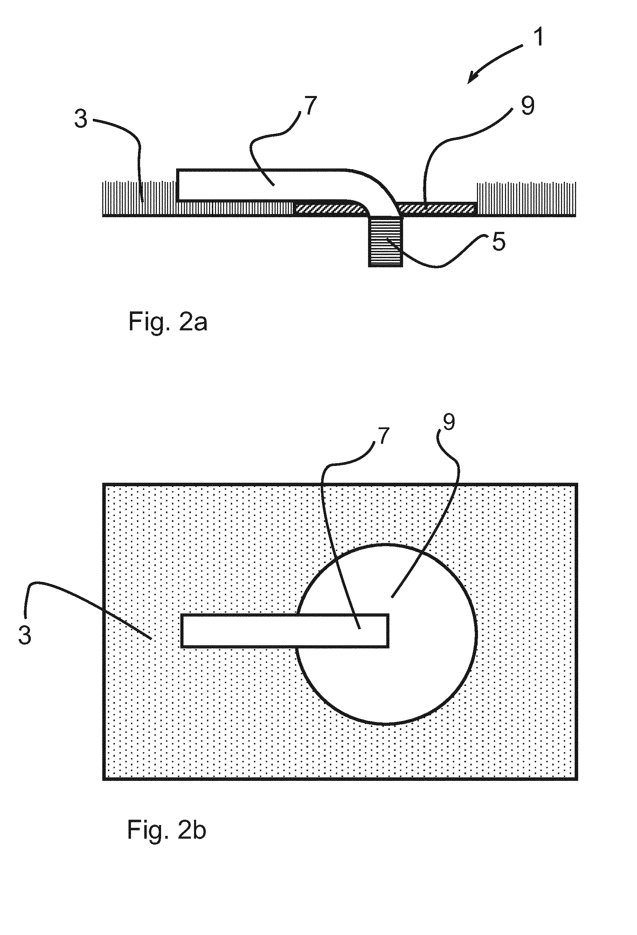

Figs. 1a-b and 2a-b show a device 1 for creating a visual marker in the grass 3 on a golf course according to the state of the art.

The device 1 comprises a base 5 and an elongated marker 7 in the form of a tubular element of an elastic material, for example a plastic or rubber material. The base is anchored in the ground under the grass 3 and the marker is connected to the base.

The device 1 also comprises a disc 9 configured in such a way that it extends horizontally from the base 5 along the grass 3 when the grass extends horizontally. The object of the disc is to stabilize the device.

The marker 7 is movable between an upright position and a lying position. The marker extends substantially vertically away from the grass 3 in the upright position and is thereby visible for a user, see Figs. 1a and 1b. The marker extends along the grass in the lying position, see Figs. 2a and 2b.

The device 1 is brought from the upright position to the lying position when driven over by a lawnmower by a front part of the lawnmower pushing perpendicularly to the extension of the marker in the upright position. The marker is configured to return to the upright position by its resilient properties as the lawnmower has driven away from the device. The device accordingly enables cutting of the grass 3 around the device without the device being moved from its anchoring position.

A problem that is caused by use of the device 1 is that the grass 3 around the device is cut unevenly since that part of the grass located under the marker 7 when it is in its lying position is by the marker prevented from being exposed to a cutting cylinder of the lawnmower when the lawnmower drives over the device. See Figs. 2a and 2b.

The grass located under the disc 9 is in the same way prevented from being exposed for the cutting cylinder of the lawnmower. Said disc also has negative impact on the grass under the disc, which results in that the grass under the disc becomes yellow or is growing badly after a time of covering by the disc.

Figs. 3a-b and 4a-b show a device 1' for creating a visual marker in the grass 3' on a golf course according to an embodiment of the invention.

The device 1' comprises a base 5' and an elongated marker 7'. The base is anchored in the ground under the grass and the marker is connected to the base.

The marker comprises a plurality of separate-standing bendable elongated elements 12 configured to be movable between said upright and lying position. The elongated elements extend along a longitudinal axis L which extends vertically or substantially vertically in the upright position of the marker and horizontally or substantially horizontally in the lying position of the marker when the lawn extends horizontally. The elongated elements are arranged at the base in such a way that they in their upright position form an accumulation which at a distance is visually perceived as a unit by the user, see Figs. 3a and 3b.

The elongated elements 12 have resilient properties allowing the elements and thereby the marker 7' to be brought from the upright position to the lying position when a lawnmower drives over the device 1' by a front part of the lawnmower pushing perpendicularly to the extension of the elongated elements in the upright position. The marker is configured to return to the upright position when the lawnmower has driven away from the device by the resilient properties of the elongated elements 12. The device 1' accordingly enables cutting of the grass 3' around the device without the device being moved from its anchoring position.

Each of the elongated elements 12 has a bending-tendency in at least one determined direction. The elongated elements are arranged in such a way that the bending-tendency of one elongated element differs from the bending-tendency of its adjacent elongated elements. When influenced by a force perpendicularly to the longitudinal axes L of the elongated elements in said upright position the elongated elements 12 are bent in different directions towards the grass 3' so that the elongated elements are separated from each other when brought towards the lying position. The device 1' thereby allowing blades of grass to penetrate up between adjacent elongated elements as they are in their lying position so that the blades of grass are exposed to the cutting cylinder of the lawnmower. See Figs. 4a and 4b.

Figs. 5a-b show an elongated element 12 in detail. The elongated element is in Fig. 5a shown from the side and in Fig. 5b from above.

The elongated elements 12 have a wave-shape alternating with respect to the respective longitudinal axis L of each element. The wave-shape is present along the entire length L1 of the respective elongated element. The wave-shapes of two adjacent elongated elements are irregular along the length of said elongated elements in such a way that the wave-shapes of said two adjacent elongated elements differ from each other. The directions in which said two adjacent elongated elements can be bent are by that differing from each other so that the elongated elements are separated from each other as they are brought towards the lying position. The wave-shape of the elongated elements has preferably at least 5 or at least 15 or at least 25 periods per elongated element.

The elongated elements mainly comprise a polymeric material which is designed with different colours corresponding to different markings on the golf course, such as red, yellow, blue and white. The polymeric material is for example any of Polypropene, Acrylonitrile-Butadiene-Styrene, Polyethene terephthalate, Polyamide, Polyvinylchloride and Polycarbonate. The polymeric material preferably consists of UV-resistant Polyamide.

The elongated elements 12 are designed in such a way that a cross-section perpendicular to their respective longitudinal axes L is asymmetrical with respect to said longitudinal axes. The cross-section in the embodiment shown in Fig. 5b has an elliptical shape. The elongated elements are irregularly arranged at the base 5', see Fig. 3b. The directions in which adjacent elongated elements can be bent thereby differing from each other so that the elongated elements are separated from each other as they are brought towards the lying position.

The elongated elements 12 in the embodiment shown have both a wave-shape and an asymmetrical cross-section with respect to their respective longitudinal axes L. It may however also be possible to provide elongated elements having bending-tendency in directions differing from those of adjacent elongated elements by means of one of the wave-shape and the asymmetrical cross-section.

The length of the base 5' and an elongated element 12 together is at least 25 cm, at least 35 cm or at least 45 cm. The base has a length of at least 10 cm, 10-20 cm, 13-16 cm or at least 20 cm. The length of the elongated elements is at least 15 cm, 15-40 cm, 20-30 cm or at least 40 cm. The length of the elongated elements is adjusted so that the elongated elements are held in the lying position until the cutting cylinder of the lawnmower has passed the device 1'.

The elongated elements 12 have a width of between 0.5 and 5 mm, preferably between 2 and 4 mm. The elongated elements form an accumulation in the upright position, which has a circumference of at least 10 mm, 10 to 70 mm, at least 70 mm, or between 20 to 40 mm. The accumulation of the elongated elements is thereby forming a visual marking for the user when the marker 7' is in the upright position.

The invention is not in any way restricted to the embodiments shown and can be modified and varied without departing from the scope of protection of the invention as defined by the appended claims.

## Claims

1. A device (1') for creating a visual marker in the grass (3') on a golf course, the device (1') comprising:
- a base (5') configured to be steadily anchored in the ground under the grass (3'),
- an elongated marker (7') connected to the base (5'),
said marker (7') being configured movable between an upright position in which the marker (7') extends away from the grass (3') and a lying position in which at least a part of the marker (7') extends along the grass (3'), wherein the marker (7') is configured to be brought from the upright position to the lying position when driven over by a lawnmower and return to the upright position after having been driven over,
wherein the marker (7') comprises a plurality of separate-standing bendable elongated elements (12) configured to be movable between said upright and lying positions and to allow blades of grass to penetrate between adjacent elongated elements (12) in the lying position, wherein the elongated elements (12) are connected to the base (5') in such a way that when they are in the upright position they extend parallel to each other so as to be visually perceived as a unit, **characterized in that** each of the elongated elements (12) has a bending-tendency in at least one determined direction, wherein the at least one direction of the bending-tendency of a majority of the elongated elements (12) is another than that of their respective adjacent elongated elements (12) so that said majority of the elongated elements (12) are configured to be bent from the upright position to the lying position in different directions with respect to each other.

2. A device (1') according to claim 1, **characterized in that** said at least one direction of the bending-tendency of said majority of the elongated elements (12) is determined by the fact that at least one part of each of said majority of elongated elements (12) has a wave-shape with respect to the longitudinal axis (L) of the respective element.

3. A device (1') according to claim 2, **characterized in that** said wave-shape comprises at least 5, 5-20, at least 15 or at least 25 periods per elongated element (12).

4. A device (1') according to any of the claims 2 or 3, **characterized in that** said wave-shape of the elongated elements (12) having said wave-shape is irregular in such a way that the wave-shapes of two adjacent elongated elements deviate from each other and that said elongated elements (12) are irregularly oriented relative to their adjacent elongated elements.

5. A device (1') according to any of the preceding claims, **characterized in that** said at least one direction of the bending-tendency of said majority of elongated elements (12) is determined by the fact that said majority of elongated elements (12) are designed so that a cross-section perpendicular to their respective longitudinal axis (L) is asymmetrical with respect to said longitudinal axis (L).

6. A device (1') according to claim 5, **characterized in that** said majority of elongated elements (12) are designed so that the cross-section perpendicular to their respective longitudinal axis (L) has an elliptical shape.

7. A device (1') according to any of the preceding claims, **characterized in that** the elongated elements (12) are irregularly oriented in the base (5').

8. A device (1') according to any of the preceding claims, **characterized in that** the elongated elements (12) have a length (L1) of at least 150 mm, 150-400 mm, 200-300 mm or at least 400 mm.

9. A device (1') according to any of the preceding claims, **characterized in that** the marker (7') comprises at least 10, 10-200, 20-150 or 50-100 said elongated elements (12).

10. A device (1') according to any of the claims 2-4, **characterized in that** all of the elongated elements (12) have said wave-shape.

11. A device (1') according to claim 6, **characterized in that** all of the elongated elements (12) are designed so that the cross-section perpendicular to their respective longitudinal axis (L) has an elliptical form.

12. A device (1') according to any of the preceding claims, **characterized in that** the elongated elements (12) have a width of 0.5-5 mm or 2-4 mm.

13. A device (1') according to any of the preceding claims, **characterized in that** the elongated elements (12) comprises a polymeric material, especially selected from the group of Polypropene, Acrylonitrile-Butadiene-Styrene, Polyethene terephthalate, Polyamide, Polyvinylchloride and Polycarbonate, preferably Polyamide.

## Patentansprüche

1. Vorrichtung (1') zur Schaffung einer visuellen Markierung im Gras (3') eines Golfplatzes, wobei die Vorrichtung (1') folgendes aufweist: einen Grundkörper (5'), der so gestaltet ist, daß er in dem Boden unter dem Gras (3') fest verankert ist; eine längliche Markierung (7'), die mit dem Grundkörper (5') verbunden ist und die so gestaltet ist, daß sie zwischen einer aufrechten Lage, in der die Markierung (7') sich von dem Gras (3') weg erstreckt, und einer liegenden Lage, in der wenigstens ein Teil der Markierung (7') sich entlang dem Gras (3') erstreckt, beweglich ist, wobei die Markierung (7') darüber hinaus so gebaut ist, daß sie von der aufrechten Lage in die liegende Lage gebracht wird, sobald sie von einem Rasenmäher überfahren wird, und dann in die aufrechte Lage zurückkehrt, wenn sie überfahren worden ist, wobei des weiteren die Markierung (7') mehrere getrennt stehende, biegbare, längliche Elemente (12) aufweist, die so gestaltet sind, daß sie zwischen den aufrechten und liegenden Lagen beweglich sind und die den Grashalmen ermöglichen, in der liegenden Lage zwischen benachbarte längliche Elemente (12) einzudringen, wobei ferner die länglichen Elemente (12) mit dem Grundkörper (5') in einer Weise verbunden sind, daß dann, wenn sie sich in der aufrechten Lage befinden, sie sich parallel zueinander erstrecken, so daß sie visuell als eine Einheit wahrgenommen werden, **dadurch gekennzeichnet, daß** jedes der länglichen Elemente (12) in wenigstens einer bestimmten Richtung eine Biegeneigung hat, wobei die wenigstens eine Richtung der Biegeneigung einer Mehrheit der länglichen Elemente (12) eine andere ist als die ihrer entsprechenden benachbarten länglichen Elemente (12), derart, daß die Mehrheit der länglichen Elemente (12) so gebaut ist, daß sie von der aufrechten Lage in die liegende Lage in unterschiedlichen Richtungen in Bezug aufeinander gebogen werden.

2. Vorrichtung (1') nach Anspruch 1, **dadurch gekennzeichnet, daß** die wenigstens eine Richtung der Biegeneigung der Mehrheit der länglichen Elemente (12) bestimmt wird durch die Tatsache, daß wenigstens ein Teil jedes Elementes der Mehrheit der länglichen Elemente (12) in Bezug auf die Längsachse (L) des entsprechenden Elementes eine Wellenform hat.

3. Vorrichtung (1') nach Anspruch 2, **dadurch gekennzeichnet, daß** die Wellenform wenigstens 5, 5 - 20, wenigstens 15 oder wenigstens 25 Perioden pro länglichem Elemente (12) umfaßt.

4. Vorrichtung (1') nach einem der Ansprüche 2 oder 3, **dadurch gekennzeichnet, daß** die Wellenform der länglichen Elemente (12), die diese Wellenform besitzen, unregelmäßig in der Art ist, daß die Wellenformen zweier benachbarter länglicher Elemente voneinander abweichen und daß die länglichen Elemente (12) in Bezug auf die benachbarten länglichen Elemente unregelmäßig ausgerichtet sind.

5. Vorrichtung (1') nach einem der vorhergehenden Ansprüche, **dadurch gekennzeichnet, daß** die wenigstens eine Richtung der Biegeneigung der Mehrheit der länglichen Elemente (12) durch die Tatsache bestimmt wird, daß die Mehrheit der länglichen Elemente (12) so gebaut ist, daß ein Querschnitt lotrecht zu ihren entsprechenden Längsachsen (L) in Bezug auf diese Längsachsen (L) asymmetrisch ist.

6. Vorrichtung (1') nach Anspruch 5, **dadurch gekennzeichnet, daß** die Mehrheit der länglichen Elemente (12) so gebaut ist, daß der Querschnitt lotrecht zu ihrer entsprechenden Längsachse (L) eine elliptische Form hat.

7. Vorrichtung (1') nach einem der vorhergehenden Ansprüche, **dadurch gekennzeichnet, daß** die länglichen Elemente (12) in dem Grundkörper (5') unregelmäßig ausgerichtet sind.

8. Vorrichtung (1') nach einem der vorhergehenden Ansprüche, **dadurch gekennzeichnet, daß** die länglichen Elemente (12) eine Länge (L1) von wenigstens 150 mm, 150 - 400 mm, 200 - 300 mm oder wenigstens 400 mm aufweisen.

9. Vorrichtung (1') nach einem der vorhergehenden Ansprüche, **dadurch gekennzeichnet, daß** die Markierung (7') wenigstens 10, 10 - 200, 20 - 150 oder 50 - 100 der genannten länglichen Elemente (12) aufweist.

10. Vorrichtung (1') nach einem der Ansprüche 2 bis 4, **dadurch gekennzeichnet, daß** alle länglichen Elemente (12) die Wellenform besitzen.

11. Vorrichtung (1') nach Anspruch 6, **dadurch gekennzeichnet, daß** alle länglichen Elemente (12) so gebaut sind, daß der Querschnitt lotrecht zu ihrer entsprechenden Längsachse (L) eine elliptische Form hat.

12. Vorrichtung (1') nach einem der vorhergehenden Ansprüche, **dadurch gekennzeichnet, daß** die länglichen Elemente (12) eine Breite von 0,5 - 5 mm oder 2 - 4 mm aufweisen.

13. Vorrichtung (1') nach einem der vorhergehenden Ansprüche, **dadurch gekennzeichnet, daß** die länglichen Elemente (12) aus einem polymeren Material bestehen, insbesondere ausgewählt aus der Gruppe von Polypropen, Acrylnitrit-Butadien-Styrene, Polyethylen-Teraphthalat, Polyamid, Polyvinylchlorid und Polykarbonat, vorzugsweise Polyamid.

## Revendications

1. Dispositif (1') permettant de créer un marqueur visuel dans la pelouse (3') d'un terrain de golf, le dispositif (1') comprenant :
- une base (5') configurée pour être ancrée stablement dans le sol sous la pelouse (3'),
- un marqueur allongé (7') relié à la base (5'), ledit marqueur (7') étant configuré pour être mobile entre une position debout dans laquelle le marqueur (7') prolonge la pelouse (3') et une position couchée dans laquelle au moins une partie du marqueur (7') s'étend le long de la pelouse (3'), dans lequel le marqueur (7') est configuré pour être amené de la position debout à la position couchée, lorsqu'une tondeuse à gazon passe dessus et pour retourner vers la position debout après le passage de la tondeuse à gazon dessus,
dans lequel le marqueur (7') comprend une pluralité d'éléments allongés pliables verticaux et séparés (12) configurés pour être mobiles entre lesdites positions debout et couchée et pour permettre à des brins d'herbe de pénétrer entre des éléments allongés (12) adjacents dans la position couchée,
dans lequel les éléments allongés (12) sont reliés à la base (5') de sorte que, lorsqu'ils sont dans la position debout, ils s'étendent parallèlement les uns aux autres de façon à être visuellement perçus comme une unité,
**caractérisé en ce que** chacun des éléments allongés (12) a une tendance au courbage dans au moins une direction déterminée, dans lequel la au moins une direction de la tendance au courbage d'une majorité des éléments allongés (12) est autre que celle de leurs éléments allongés (12) adjacents respectifs, de sorte que ladite majorité d'éléments allongés (12) soit configurée pour être courbée de la position debout à la position couchée dans des directions différentes les uns par rapport aux autres.

2. Dispositif (1') selon la revendication 1, **caractérisé en ce que** ladite au moins une direction de la tendance au courbage de ladite majorité des éléments allongés (12) est déterminée par le fait qu'au moins une partie de chacun de ladite majorité d'éléments allongés (12) a une forme d'onde par rapport à l'axe longitudinal (L) de l'élément respectif.

3. Dispositif (1') selon la revendication 2, **caractérisé en ce que** ladite forme d'onde comprend au moins 5, 5 à 20, au moins 15 ou au moins 25 périodes par élément allongé (12).

4. Dispositif (1') selon l'une quelconque des revendications 2 et 3, **caractérisé en ce que** ladite forme d'onde des éléments allongés (12) ayant ladite forme d'onde est irrégulière, de sorte que les formes d'onde de deux éléments allongés adjacents s'écartent l'une de l'autre et que lesdits éléments allongés (12) soient orientés irrégulièrement par rapport à leurs éléments allongés adjacents.

5. Dispositif (1') selon l'une quelconque des revendications précédentes, **caractérisé en ce que** ladite au moins une direction de la tendance au courbage de ladite majorité d'éléments allongés (12) est déterminée par le fait que ladite majorité d'éléments allongés (12) est conçue de sorte qu'une section perpendiculaire à leur axe longitudinal (L) soit asymétrique par rapport audit axe longitudinal (L).

6. Dispositif (1') la revendication 5, **caractérisé en ce que** ladite majorité d'éléments allongés (12) est conçue de sorte que la section perpendiculaire à leur axe longitudinal (L) ait une forme elliptique.

7. Dispositif (1') selon l'une quelconque des revendications précédentes, **caractérisé en ce que** les éléments allongés (12) sont orientés irrégulièrement dans la base (5').

8. Dispositif (1') selon l'une quelconque des revendications précédentes, **caractérisé en ce que** les éléments allongés (12) ont une longueur (L1) d'au moins 150 mm, 150 à 400 mm, 200 à 300 mm ou au moins 400 mm.

9. Dispositif (1') selon l'une quelconque des revendications précédentes, **caractérisé en ce que** le marqueur (7') comprend au moins 10, 10 à 200, 20 à 150 ou 50 à 100 desdits éléments allongés (12).

10. Dispositif (1') selon l'une quelconque des revendications 2 à 4, **caractérisé en ce que** tous les éléments allongés (12) ont ladite forme d'onde.

11. Dispositif (1') selon la revendication 6, **caractérisé en ce que** tous les éléments allongés (12) sont conçus de sorte que la section perpendiculaire à leur axe longitudinal (L) respectif ait une forme elliptique.

12. Dispositif (1') selon l'une quelconque des revendications précédentes, **caractérisé en ce que** les éléments allongés (12) ont une largeur de 0,5 à 5 mm ou 2 à 4 mm.

13. Dispositif (1') selon l'une quelconque des revendications précédentes, **caractérisé en ce que** les éléments allongés (12) comprennent un matériau polymère, spécialement choisi dans le groupe du polypropylène, de l'acrylonitrile-butadiène-styrène, du poly(téréphtalate d'éthylène), du polyamide, du poly(chlorure de vinyle) et du polycarbonate, de préférence le polyamide.
